# EUROPEAN PATENT SPECIFICATION

(11) **EP 0 970 850 B1**
(45) Date of publication and mention of the grant of the patent: **17.10.2007**
(21) Application number: 98900045.0
(22) Date of filing: 05.01.1998
(51) Int. Cl.: B60R 5/04, B60R 21/06

(54) **RETRACTABLE PARTITIONING SYSTEM FOR VEHICLE**
EINZIEHBARES UNTERTEILUNGSSYSTEM FÜR FAHRZEUGE
SYSTEME DE CLOISONNEMENT RETRACTABLE POUR VEHICULE

(43) Date of publication of application: 12.01.2000
(73) Proprietor: ASHIMORI KOGYO KABUSHIKI KAISHA, Osaka-shi, Osaka hu 550 (JP)
(72) Inventor: NISHIDA, Takao, Takarazuka-shi, Hyogo-ken 665 (JP); HANATANI, Takao, Ibaraki-shi, Osaka-hu 567 (JP)
(74) Representative: Senior, Alan Murray
(86) International application number: PCT/JP1998/000008
(87) International publication number: WO 1999/035006

(56) References cited:
- EP-A- 0 140 366
- EP-A- 0 838 375
- DE-A- 2 749 560
- DE-A- 3 418 378
- JP-A- 9 118 197
- JP-A- 9 290 691
- JP-A- 10 024 790
- US-A- 4 508 289
- US-A- 5 288 122

## Description

### Technical field

The present invention relates to an automotive roll-up partitioning system. More specifically, the present invention relates to a device having a lock mechanism that stops the rotation of a take-up shaft by detecting when a partitioning member is rapidly pulled out.

### Background technology

In automobiles such as hatchbacks, vans, station wagons, and the like, partitioning systems have been used to protect passengers from baggage by using a partitioning member to stop baggage when it moves toward the passenger side due to application of the emergency brakes or the like. The partitioning member is a net or the like that expands to separate the baggage area from the passengers side. Alternatively, the partitioning member can expand to cover the baggage in the baggage area. In these conventional partitioning systems, the partitioning member is set up so that it does not loosen, thus reliably and safely preventing baggage from moving even if a large load is applied to the partitioning member.

For example, in Japanese patent publication number 6-2454, a partitioning system includes a roll-up device, a tonneau cover, and a partitioning member. The roll-up device is mounted behind the seat back and its ends are fixed to the side walls of the vehicle. The tonneau cover is rolled up by the roll-up device, and the partitioning member is disposed integrally with the leading end of the tonneau cover. The tonneau cover is pulled rearward following the partitioning member, and the leading end of the tonocover is engaged to the vehicle toward the rear of the baggage area, thus providing a tonocover device. The partitioning member can also be pulled upward by itself from the roll-up device with the leading end of the partitioning member being engaged to the ceiling of the automobile and the base of the member being engaged to an engagement piece of the roll-up device. This allows the partitioning member to be stretched taut to prevent it from being pulled out from the roll-up device. This stops baggage in the baggage area from moving toward the passenger side.

In this type of partitioning system, however, the space in the baggage area in which baggage can be loaded is restricted due to the need to fix the ends of the roll-up device to the sidewalls of the automobile and to mount the roll-up device behind the seat back. It is also not possible to recline the seat back. To maximize baggage space, the roll-up device can be fixed directly to the seat back. In this case, the ends of the partitioning member are engaged to the roof of the automobile and the roll-up device, respectively, thus setting up the partitioning member so that it cannot be pulled out from the roll-up device. This also prevents the seat backs from being reclined. Also, since providing a taut partitioning member requires engaging the ends of the partitioning member to engagement pieces on the ceiling and the roll-up device, the process of setting up the partitioning member becomes very tedious.

Japanese laid-open patent publication number 5-44381 describes a partitioning system that includes: a roll-up device having a rotatable roll-up shaft that is kept pulled in a direction of retraction; a partitioning member that is rolled up by the roll-up device; and a lock mechanism that detects rapid pulling out of the partitioning member and stops the extraction of the partitioning member. This lock mechanism includes a roller member having approximately the same length as the roll-up shaft. The partitioning member extending from the roll-up shaft is turned around the roller member and upwardly extended. If the partitioning member is rapidly pulled upward and a large load is applied to the roller member, the roller member stops rotating and the friction between the roller member and the partitioning member stops the extraction of the partitioning member. The taut state of the partitioning member prevents baggage in the baggage area from moving toward the passenger side.

With the lock mechanism described above, the ends of the roller member are slidably fitted to bearings, which are formed as vertical slots on the casing of the roll-up device, thus providing rotatable support for the roller member. When a large load is applied to the roller member and the roller member moves slightly upward, engagement sections formed at the ends of the roller member engage with engagement sections formed on the upper ends of the bearings, thus stopping the rotation of the roller member.

In this partitioning system, the lock mechanism stops the rotation of the roller member, and the friction between the roller member and the partitioning member stops the extraction of the partitioning member. Thus, when a large load is applied to the partitioning member, it is possible for the partitioning member to slide against the roller member so that the partitioning member can be pulled out, thus reducing the protection provided for the passengers. Furthermore, in the lock mechanism, locking is achieved by slidably fitting the ends of the roller member to the bearings formed on the roll-up device casing, thus providing rotatable support. This tends to result in wear on the ends of the roller member and on the bearings, which makes it difficult to provide a long lifespan. Also, the roll-up device tends to be large since the roller member of the lock mechanism needs to be disposed on the roll-up device.

DE-A1-2749560 discloses an automotive roll-up partitioning system comprising a roll-up device having a rotatable roll-up shaft biased to rotate in a direction of retraction, a casing holder rotatably supporting the roll-up shaft, a partitioning member, having a base end fixed to the roll-up shaft, being rolled up thereon and extended therefrom, a lock mechanism for stopping rotation of said roll-up shaft thereby to prevent rapid pulling out of the partitioning member.

### OBJECTS AND SUMMARY OF THE INVENTION

The object of the present invention is to provide an automotive roll-up partitioning system that: reliably protects passengers from baggage in the baggage area; allows seat backs to be reclined; allows the partitioning member to be easily set up; provides a long lifespan for the lock mechanism; provides a compact roll-up device; and prevents the lock mechanism from locking when the partitioning member is completely rolled up.

The present invention provides an automotive roll-up partitioning system comprising: a roll-up device having a rotatable roll-up shaft biased to rotate in a direction of retraction; a casing holder rotatably supporting said roll-up shaft; a partitioning member, having a base end fixed to said roll-up shaft, being rolled up thereon and extended therefrom; a lock mechanism for stopping rotation of said roll-up shaft; wherein said lock mechanism is adapted to detect a rapid pulling out of said partitioning member and then to stop rotation of said roll-up shaft, thereby stopping rapid pulling out of said partitioning member, and further comprising inner teeth integrally formed with said casing holder; a lock arm base attached to a first end of said roll-up shaft; a lock arm pivotably supported on said lock arm base at a position eccentric from an axis of said roll-up shaft; a claw formed by a portion of said lock arm engagable with said inner teeth; a sensor spring biasing said lock arm in a direction such that said claw is disengaged from said inner teeth; an inertia mass applying an inertia force to said lock arm in a direction of engagement between said claw and said inner teeth when said partitioning member is rapidly pulled out from said roll-up device; a cut-out, having a prescribed length, in at least one portion along a perimeter of said inner teeth of said casing holder; and said cut-out being positioned facing said claw when said partitioning member is completely rolled up, thereby preventing said claw of said lock arm from engaging with said inner teeth when said partitioning member is completely rolled up in said roll-up device.

In this partitioning system, the partitioning member is drawn out from the roll-up device attached to a seat back, the ceiling of the vehicle, or the like. The leading end of the partitioning member is removably connected to the ceiling of the vehicle or the seat back of the seat. This sets up the partitioning member so that the baggage area of the vehicle and the passengers side are separated. With the partitioning member set up, baggage from the baggage area that moves forward due to application of emergency brakes or the like can be stopped by the partitioning member. If the partitioning member is drawn out rapidly from the roll-up device, the lock mechanism detects the rapid extraction of the partitioning member and immediately stops the rotation of the roll-up shaft. This stops the partitioning member from being drawn out from the roll-up device. The resulting tautness of the partitioning member protects the passengers from the baggage. Thus, this partitioning system uses the lock mechanism to stop the rotation of the roll-up shaft when rapid pulling out of the partitioning member is detected. As a result, the drawing out of the partitioning member from the roll-up device is reliably halted right after the rapid extraction of the partitioning member starts. This reliably prevents the baggage in the baggage area from moving toward the passengers. Furthermore, since the lock mechanism does not activate unless the partitioning member is rapidly pulled out, the partitioning member can be freely pulled out under normal conditions.

A unit containing the lock mechanism, the partitioning member, and the roll-up device as described above can also be used for an automotive roll-up partitioning system attached to each of seat backs of a pair of laterally adjacent divided seats. It would be desirable to use a stay to integrally support the leading ends of the pair of partitioning members. As with the above, in this type of partitioning system, the passengers seated at the pair of divided seats can be protected from baggage.

Since the lock mechanism is usually not activated, the pair of partitioning members can be freely pulled out independently. Thus, after setting up the partitioning members, the pair of seat backs can be reclined independently.

The inertia mass may be either an independent element attached to the lock arm or one integrated with the lock arm.

When the partitioning member is drawn out under normal conditions, the roll-up shaft, the lock arm base, the inertia mass, and the lock arm rotate integrally. If a rapid withdrawal of the partitioning member starts to take place, the roll-up shaft rotates rapidly and there is a rotation delay in the inertia mass relative to the roll-up shaft. This results in an inertia force being applied to the lock arm in the direction of engagement between the claw of the lock arm and the inner teeth. Then, the lock arm pivots in opposition to the sensor spring and the claw engages with the inner teeth, stopping the pulling out of the partitioning member. When the roll-up shaft is rotated in the direction of retraction from such a state, the engagement between the claw and the inner teeth is released and the lock arm pivots due to the sensor spring so that it returns to its normal position.

When this lock mechanism is used, the lock mechanism provides a very simple and compact structure and mechanism and also provides lower productions. Since the lock mechanism can be disposed on one end of the roll-up device, the roll-up device can be made very compact and there is almost no wear in the different elements. This provides a longer lifespan for the lock mechanism.

A cut-out is s formed at at least one portion along the perimeter of the inner teeth of the casing holder. The cut-out is formed with a prescribed length and is adapted to be positioned facing the claw when the partitioning member is completely rolled up. This prevents the claw of the lock arm from engaging with the inner teeth when the partitioning member is completely rolled , and therefore, the lock mechanism is not activated when the partitioning member is completely rolled up.

If the automotive roll-up partitioning system is to be used for a pair of seat backs, it would be possible for the pair of partitioning members to be formed from a single partitioning member on which is formed a longitudinal slit aligned with the midpoint position between the pair of roll-up devices, with the slit extending near the leading end of the partitioning member. In this case, the pair of partitioning members can be formed simply by making a slit in a single partitioning member, thus providing a very easy production process. Also, attaching a stay to the leading ends of the pair of partitioning members can be performed easily.

When the automotive roll-up partitioning system is disposed on the pair of seat backs, a stay can be used to integrally support the leading ends of the pair of partitioning members. The stay is removably engaged to an engagement section on the vehicle. The leading ends of the pair of partitioning members are attached to a pair of attachment sections which are removably connected. When the pair of attachment sections are engaged with the engagement section of the vehicle, the pair of partitioning members can be set up so that there is partial overlap. In this type of partitioning system, the partial overlap of the pair of partitioning members minimizes the gap between the pair of partitioning members, thus improving the protection provided for the passengers from the baggage. Furthermore, when the stay is disengaged from the engagement sections of the vehicle, the pair of attachment sections can be separated so that each attachment sections is integrally supported by a seat back. Thus, the seat backs can be reclined independently if the partitioning system is not being used, and only one partitioning member can be set up if necessary.

Furthermore, for partitioning systems in which a cut-out is formed along the inner teeth of the casing holder, it would be possible to have the roll-up device include an attachment mechanism to which a casing holder is attached. This attachment mechanism includes a first attachment section for attaching the casing holder at a prescribed first orientation and a second attachment section for attaching the casing holder at a prescribed second orientation offset by a prescribed angle around the axis of the roll- up axis relative to the first orientation.

In setting up the partitioning system, if the claw of the lock arm does not face the cut-out when the casing holder is put in the first orientation by being attached to the first attachment section of the attachment mechanism, the casing holder can be put in the second orientation by being attached to the second attachment section, thus reliably allowing the claw of the lock arm to face the cut-out.

The above, and other objects, features and advantages of the present invention will become apparent from the following description read in conjunction with the accompanying drawings, in which like reference numerals designate the same elements.

### Brief description of the drawings

Fig. 1 is a perspective drawing of the rear seat and the partitioning system of an automobile.
Fig. 2 is a perspective drawing of the partitioning system and the rear seat from Fig. 1 (with the seat back reclined).
Fig. 3 is a perspective drawing of the partitioning system from Fig. 1.
Fig. 4 is a detail drawing of the lock mechanism (unlocked) which does not form a part of the invention.
Fig. 5 is a detail drawing of the lock mechanism (locked) which does not form a part of the invention.
Fig. 6 is a detail drawing of the lock mechanism (immediately after being unlocked) which does not form a part of the invention.
Fig. 7 is a perspective drawing of a partitioning system.
Fig. 8 is a schematic detail drawing of the partitioning system from Fig. 7.
Fig. 9 is a schematic detail drawing of the partitioning system from Fig. 7.
Fig. 10 is a perspective drawing of an automotive rear seat and a partitioning system.
Fig. 11 is a perspective drawing of an automotive rear seat and a partitioning system.
Fig. 12 is an enlarged drawing of a lock mechanism of an embodiment of the present invention.
Fig. 13 is an enlarged drawing of the lock mechanism of the embodiment.
Fig. 14 is an enlarged drawing of the lock mechanism of the embodiment.
Fig. 15 is an enlarged drawing of the lock mechanism of an alternative embodiment.
Fig. 16 is an enlarged drawing of the lock mechanism of the alternative embodiment.
Fig. 17 is an enlarged drawing of the lock mechanism of the alternative embodiment.

The present invention is implemented for an automotive roll-up partitioning system used to protect passengers from baggage loaded in the baggage area of an automobile such as a hatchback, a van, or a station wagon.

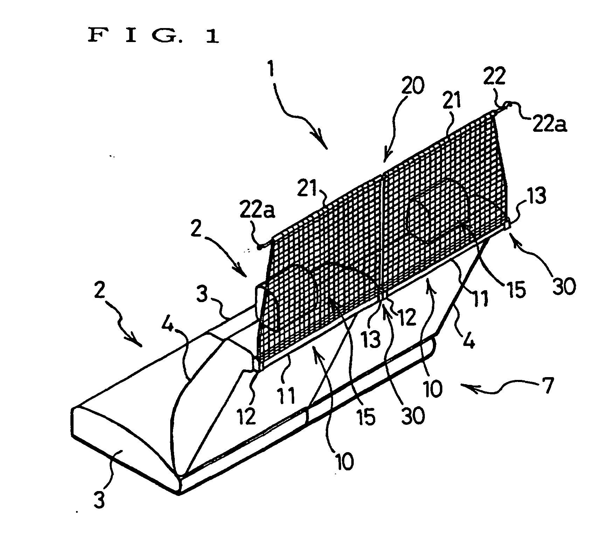

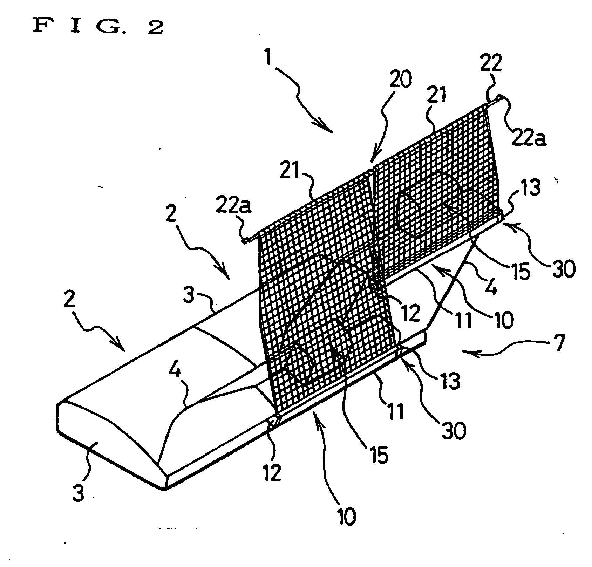

Referring to Fig. 1 and Fig. 2, the automobile includes divided seats 2 divided into two sections at a 6:4 ratio with the sections disposed laterally adjacent to each other in the cabin. Each divided seat 2 includes a seat cushion 3 and a seat back 4. Each of the seat backs 4 can be reclined. A baggage area 7 is disposed behind the pair of seat backs 4 to allow baggage to be loaded. Referring to Fig. 1 through Fig. 3, a partitioning system 1 includes: a pair of roll-up devices 10, each of which is attached to a seat back 4; a pair of partitioning members 15, each of which is rolled up by a roll-up device 10; a stay 20 fixed to the leading ends of the pair of partitioning members 15; and a pair of lock mechanisms 30, each of which is disposed on the right ends of the roll-up devices 10.

Each roll-up device 10 includes: a cylindrical member 11 formed with a slit 11 a extending laterally in relation to the cabin; a pair of casing holders 12,13 fixed to the left and right ends of the cylindrical member 11; and a roll-up shaft 14 rotatably supported in the cylindrical member 11 by a pair of casing holders 12, 13. A torsion spring (not shown in the figure) maintains tension on the roll-up shaft 14 in the direction of retraction. The base end of the partitioning member 15 is fixed to the roll-up shaft 14, so that a tension is maintained on the partitioning member 15 in the direction of retraction. Although not shown in the figure, the pair of roll-up devices are screwed to the back of the seat backs 4 using attachment pieces or the like.

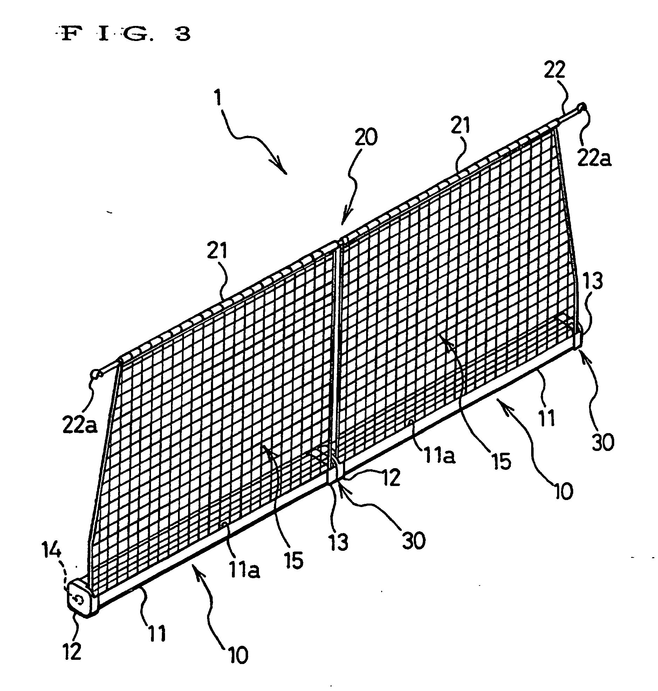

Referring to Fig. 3, the pair of partitioning members 15, each of which is attached to the roll-up shaft 14 so that it can be rolled up, are formed from a high-strength fiber or a high-strength metal cloth or net. The leading ends of the pair of partitioning members 15 are integrally supported by the stay 20. The stay 20 includes: a pair of cylindrical attachment sections 21, each of which is attached to the leading end of a partitioning member 15; and a shaft 22 fitted and fixed inside the pair of attachment sections 21. A pair of hooks 22a is formed at the ends of the shaft 22. The hooks 22a can be engaged with and disengaged from a pair of engagement sections (not shown in the figure) on the ceiling of the vehicle.

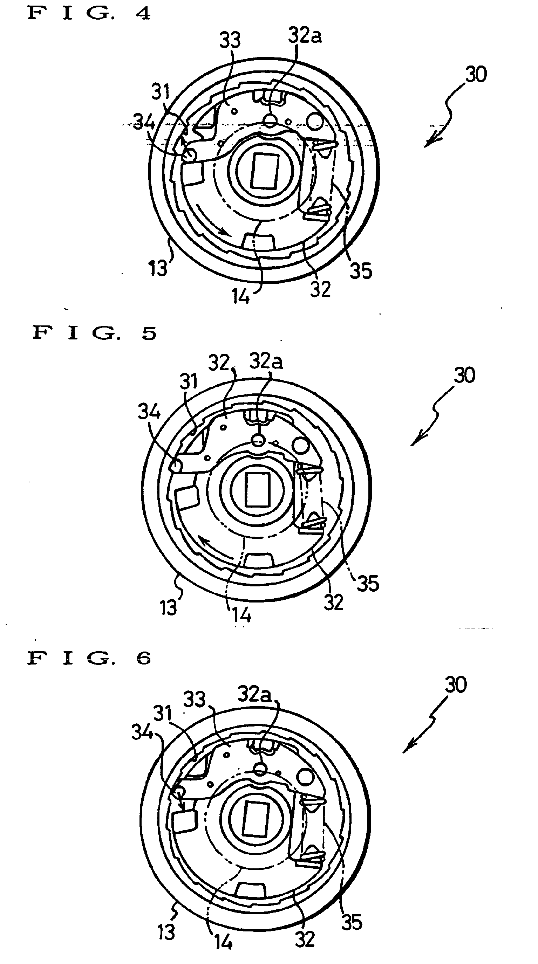

The lock mechanisms 30, when detecting rapid pulling out of the partitioning members 15, stops rotation of the roll-up shaft 14. Referring to Fig. 4 through Fig. 6, the lock mechanisms include: a casing holder 13 on which are formed inner teeth 31; a lock arm base 32 fixed to one end of the roll-up shaft 14; a lock arm 33 rotatably supported by a pin 32a provided on the lock arm base 32 at a position eccentric from the axis of the roll-up shaft 14, the lock arm 33 including a claw 34 engageable with the inner teeth 31 of the casing holder 13; and a sensor spring 35 biasing the lock arm base 32 in the direction of non-engagement between the lock arm 33 and the internal teeth 31. The lock arm 33 is metallic and has a prescribed mass. The lock arm 33 also includes an inertia mass so that when the partitioning member 15 is rapidly pulled out, inertia force by the inertia mass is applied to the lock arm 33 and the claw 34 engages with the inner teeth 31.

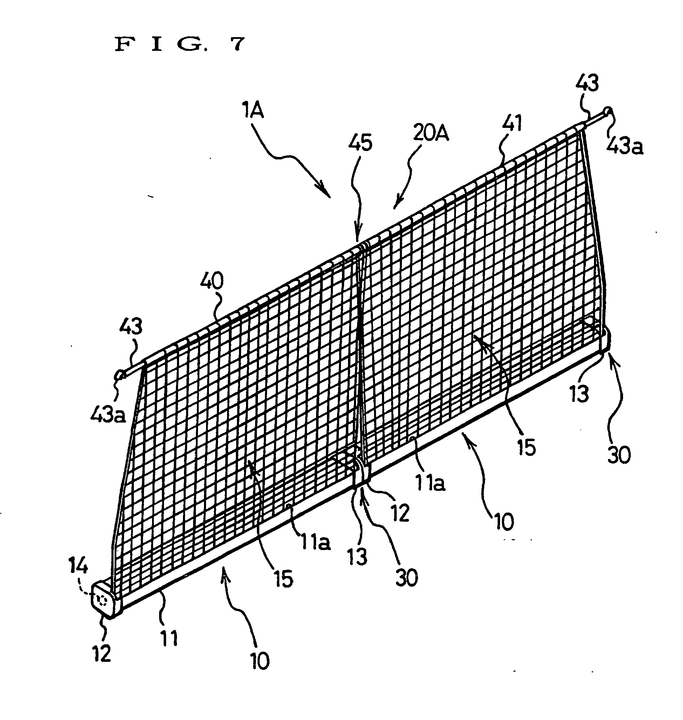

Referring to Fig. 4, when the partitioning member 15 is pulled out normally, the roll-up shaft 14, the lock arm base 32, and the lock arm 33 rotate integrally around the axis of the roll-up shaft 14 in the direction indicated by the arrow. If the partitioning member 15 is rapidly pulled out and the lock arm base 32 is rotated abruptly with the roll-up shaft 14, the lock arm 33 is left behind. This is because inertia force is applied to the lock arm 33 in the direction of engagement between the claw 34 and the inner teeth 31. As a result, the lock arm 33 is pivoted around the pin 32a in the direction indicated by the arrow and in opposition to the sensor spring 35. Referring to Fig. 5, the claw 34 engages with the inner teeth 31 of the casing holder 13 and the rotation of the roll-up shaft 14 is stopped, thus halting the pulling out of the partitioning member 15. If the roll-up shaft 14 is then rotated in the direction of retraction (in the direction indicated by the arrow in Fig. 5), the engagement between the claw 34 and the inner teeth 31 is released and the lock arm 33 pivots due to the sensor spring 35, thus restoring the normal position shown in Fig. 4.

The following is a description of how the partitioning system 1 operates.

The pair of partitioning members 15 is pulled out from the pair of roll-up devices 10 attached to the seat backs 4. The hooks 22a of the stay 20 are engaged with the engagement sections on the ceiling of the vehicle. Referring to Fig. 1, this sets up the pair of partitioning members 15 so that the baggage area 15 is partitioned off from the passengers side. If the pair of partitioning members 15 is set up and baggage loaded in the baggage area 7 moves forward due to application of the emergency brakes or the like, a load is applied to the partitioning members 15. As the partitioning members 15 are rapidly pulled out from the corresponding roll-up devices 10, the lock mechanisms 30 detect the rapid pulling out of the partitioning members 15 and stop the rotation of the roll-up shaft 14. This prevents the partitioning members 15 from being pulled out from the roll-up devices 10. The resulting taut state of the partitioning members 15 prevents the baggage in the baggage area 7 from moving toward the passenger side and protects the passengers from the baggage.

With the partitioning system 1 described above, the pair of lock mechanisms 30 detect that the pair of partitioning members 15 are pulled out rapidly and stop the rotation of the roll-up shaft 14. Thus, the pulling out of the partitioning members 15 from the roll-up devices 10 is reliably halted immediately after the pulling out of the partitioning members 15 from the roll-up devices 10. Since the lock mechanism 30 is not activated unless the partitioning members 15 are pulled out rapidly, the pair of partitioning members 15 can be freely pulled out under normal conditions. Thus, once the partitioning members 15 are set up, each of the pair of seat backs 4 can be reclined, as shown in Fig. 2.

The lock mechanisms 30 are designed with very simple and compact structures and mechanisms and also involve low production costs. Also, since the lock mechanism 30 can be disposed at one end of the roll-up device 10, the roll-up device 10 can be designed very compactly. Since there is almost no wear in the various members, the lock mechanism 30 can have a long lifespan. In the lock mechanism 30, it would also be possible to have an inertia mass disposed separately from the lock arm 33. The inertia force of the inertia mass would be applied to the lock arm 33 in the direction of engagement between the claw 34 and the inner teeth 31 when the partitioning members 15 are rapidly pulled out.

The following is a description of alternative systems. Like numerals will be assigned to like elements from the system described above.

### 1) First alternative system: (see Fig. 7 through Fig. 9)

In the description of this alternative system, like elements will be assigned like numerals as the system described above and the corresponding description will be omitted. This will apply to the other alternative systems as well.

In a partitioning system 1A, a pair of attachment sections 40, 41 of a stay 20A are removably connected via a connecting mechanism 45. When the pair of attachment sections 40, 41 are connected, the pair of partitioning members 15 partially overlap each other. The pair of attachment sections 40, 41 are formed as cylinders that have different diameters and that can fit together. A pair of shafts 43 having hooks 43a are fitted and fixed inside the ends of the pair of attachment sections 40, 41.

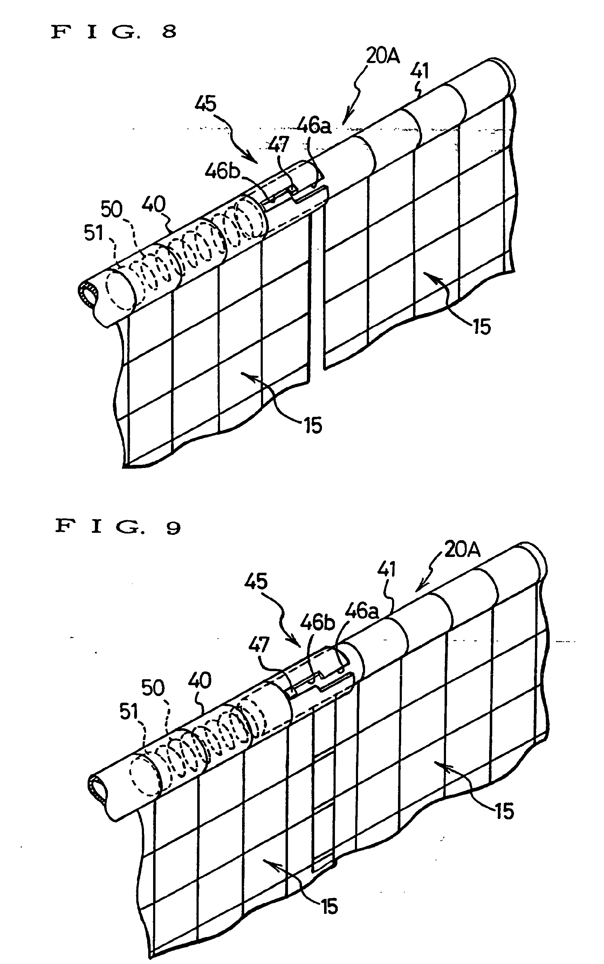

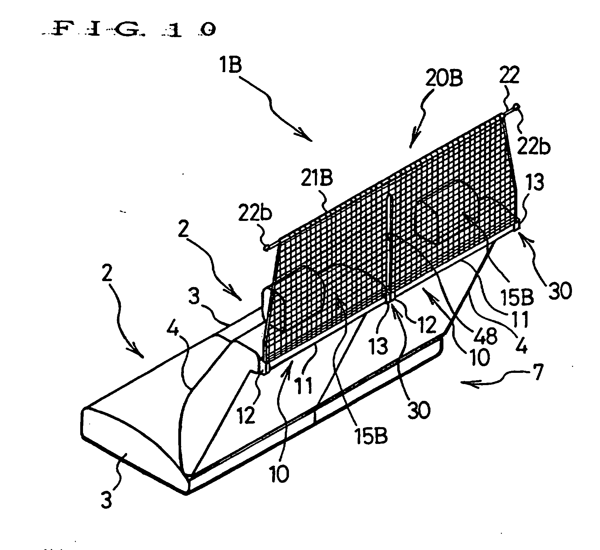

Referring to Fig. 8 and Fig. 9, the connecting mechanism 45 includes first and second cut-outs 46a, 46b, which are formed at the end of the attachment section 40 in a staircase arrangement. The connecting mechanism 45 also includes an engagement projection 47 disposed at the outer perimeter section of the end of the attachment section 41. The pair of attachment sections 40, 41 are fitted together from a separated state by fitting the end of the attachment section 41 into the end of the attachment section 40. This causes the engage projection 47 to engage with the first cut-out 46a, thus engaging the ends. Then, the attachment sections 40, 41 are rotated slightly relative to each other. Referring to Fig. 8, this causes the engagement projection 47 to engage with the second cut-out section 46b, resulting in the pair of attachment sections 40, 41 being connected so that there is no overlap between the pair of partitioning members 15. Then, attachment section 41 is further inserted into the attachment section 40. Referring to Fig. 9, the engagement projection 47 engages with the end of the second cut-out section 46b so that there is partial overlap in the pair of partitioning members 15, as shown in Fig. 7.

In the connecting mechanism 45, a compression spring 50 is fitted and fixed inside the attachment section 40. When the attachment sections 40, 41 are connected, the spring 50 acts to push the sections apart, thus maintaining the state shown in Fig. 8. Referring to Fig. 9, when the hooks 43a at the ends of the stay 20A are engaged with the engagement section, the spring 50 is in a compressed state so that the hooks 43a push against the engagement sections.

Because the spring 50 is disposed between the attachment sections 40, 41 in this manner, the pair of partitioning members 15 naturally overlap when the stay 20A is attached to the car. When the stay 20A is removed, the overlap is eliminated so that there is no obstruction to the rolling up of the pair of partitioning members 15. The spring 50 is fixed to an attachment member 51 fixed and fitted to the inside of the attachment section 40.

The partitioning system 1A described above provides similar operations and advantages as the system described above. Furthermore, by allowing the pair of partitioning members 15 to partially overlap so that the gap between the pair of partitioning members is eliminated as much as possible, it is possible to further reliably prevent baggage from going to the passengers side through the gap. By disengaging the stay 20A from the engagement sections on the ceiling of the automobile and separating the pair of attachment sections 40, 41, the attachment sections 40, 41 can be integrally supported by the seat backs 4. Thus, when the partitioning system 1A is not used, the pair of seat backs 4 can be reclined independently. Also, when necessary, only one of the partitioning members 15 can be pulled out and used.

### 2) Second alternative system (see Fig. 10)

In a partitioning system 1B according to this alternative system, a pair of partitioning members 15B is formed from a single wide partitioning member having a longitudinal slit 48 aligned with the midpoint between the pair of roll-up devices 10 and extending toward the leading end of the partitioning members 15B. In stay 20B, a shaft 22 having hooks 22b formed at both ends is fixed and fitted inside a cylindrical attachment section 21B attached to the ends of the partitioning members 15B.

This partitioning system 1B provides approximately the same operations and advantages as the system described above. Furthermore, since the pair of partitioning members 15B is simply a single wide partitioning member on which a slit 48 is formed, production and processing is very simple. Also, in the production of the partitioning system 1B, the attachment to the stay 20B of the leading end of the pair of partitioning members 15B is likewise simple.

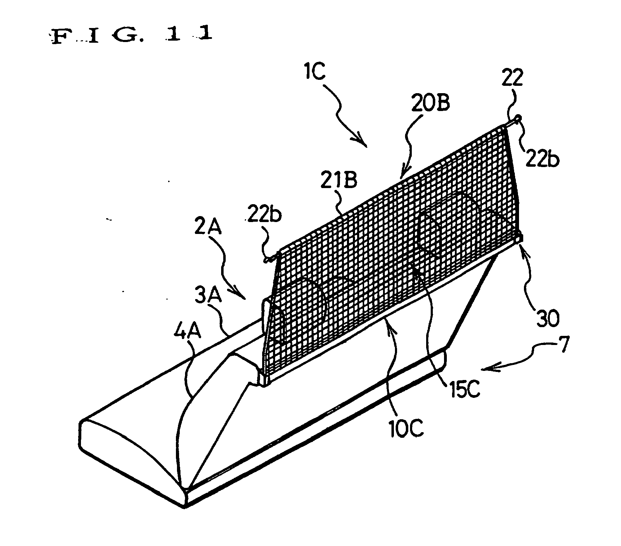

### 3) Third alternative system (see Fig. 11)

The vehicle in a third alternative system is equipped with a bench seat 2A extending across the entire length of the cabin. The seat 2A includes a seat cushion 3A and a seat back 4A.

A partitioning system 1C includes: a roll-up device 10C having a width roughly equal to the entire width of the seat 2; a partitioning member 15C that is rolled up by the roll-up device 10C; and a stay 20B fixed to the leading end of the partitioning member 15C. The roll-up device 10C includes a lock mechanism 30 toward its right end and is fixed to the seat back 4. The stay 20B is similar to the stay from the second alternative system described above. This partitioning system 1C provides a very simple structure with fewer elements compared to the system and the alternative systems described above. This system can be implemented specifically in automobiles equipped with bench seats or seats having non-reclinable seat backs. In this partitioning system 1C, it would also be possible to have the roll-up device 10C fixed to the ceiling of the automobile so that the partitioning member 15C is expanded by drawing the partitioning member 15C downward and engaging the stay 20B to the seat back 4.

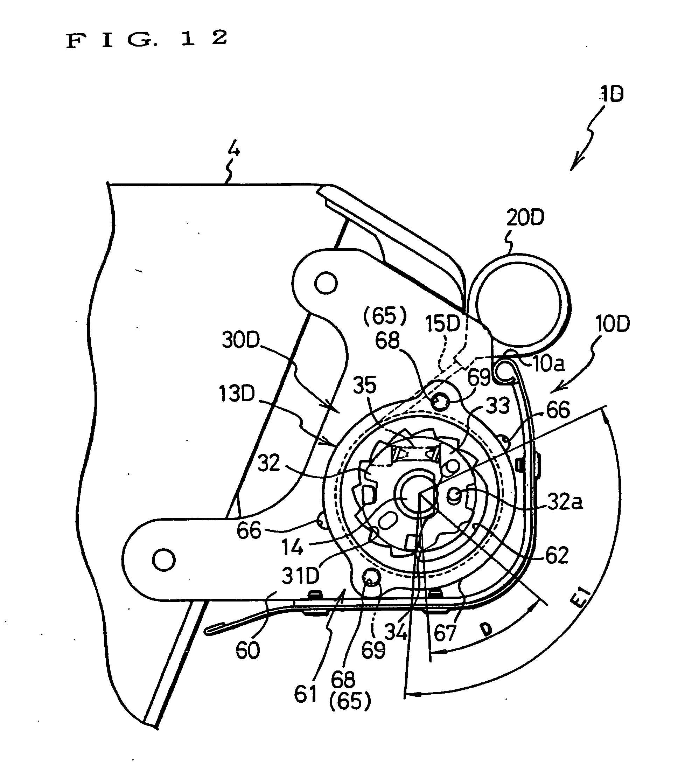

### 4) Embodiment of the invention (see Fig. 12 through Fig. 14)

In a partitioning system 1D according to the embodiment, a casing holder 13D is attached to the left end of a roll-up device 10D using an attachment mechanism 61. In the lock mechanism 30D, a cut-out 62 is formed along the perimeter of inner teeth 31D of the casing holder 13D. The cut-out 62 is formed over a prescribed length extending along the perimeter and has a prescribed angle E1 (e.g., E1=approximately 120 degrees). The cut-out -62 is positioned so that it faces a claw 34 of a lock arm 33 when the roll-up device 10D is completely rolled up. This prevents the claw 34 from engaging with the inner teeth 31D when the partitioning member 15D is completely rolled up and the stay 20D is in contact with a webbing opening 10a of the roll-up device 10D.

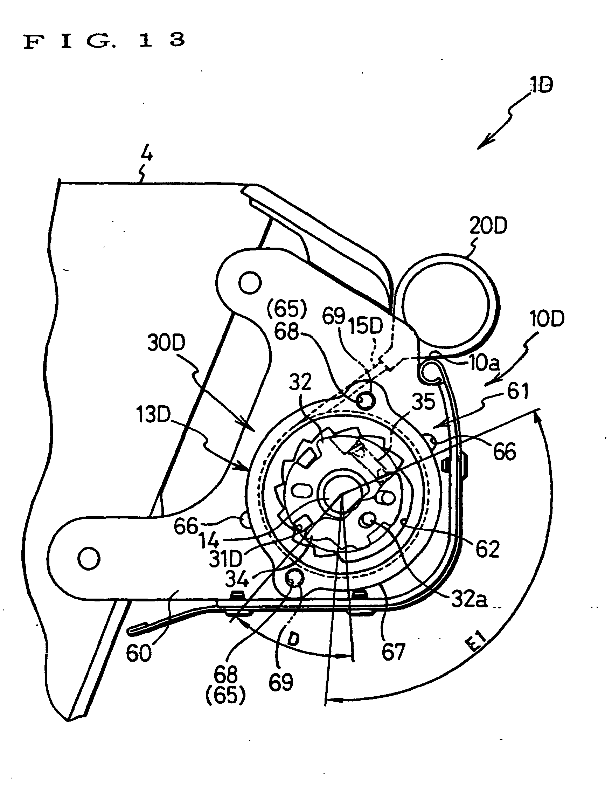

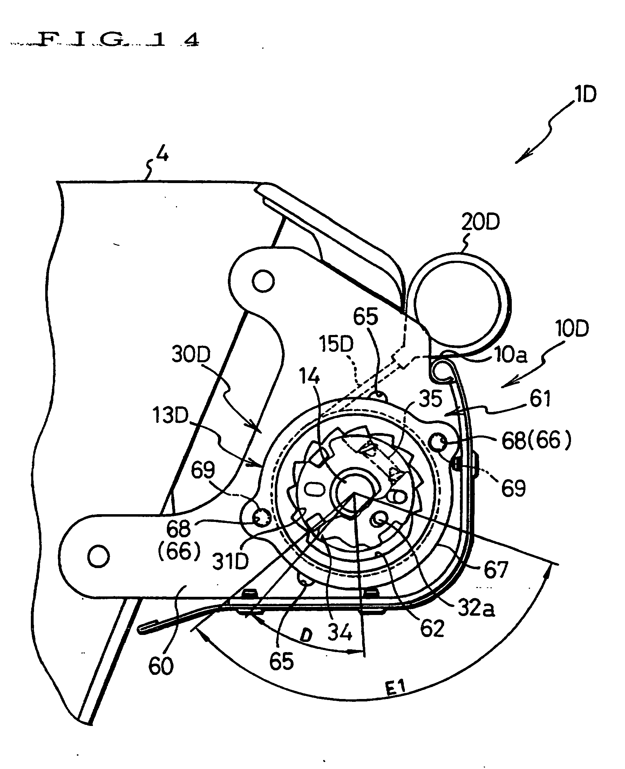

In the attachment mechanism 61, a side plate 60 is formed with a pair of first attachment openings 65 and a pair of second attachment openings 66. Referring to Fig. 12 and Fig. 13, the first attachment openings 65 serve as a first attachment section for attaching the casing holder 13D at a prescribed first orientation. Referring to Fig. 14, the second attachment openings 66 serve as a second attachment section for attaching the casing holder 13D at a prescribed second orientation. The second orientation is offset by a prescribed angle A (e.g., A = approximately 45 degrees) relative to the first orientation, where the angle A is in the same direction that the partitioning member is drawn out from the roll-up shaft 14.

A collar 67 is formed at the free end of the casing holder 13D so that it is in contact with the left surface of the side plate 60. A pair of bolt openings 68 is formed on the collar 67. The collar 67 is oriented so that the bolt openings 68 are aligned with the first pair of attachment openings 65 or the second pair of attachment openings 66. The collar 67 is then fixed with a pair of bolts 69, thus fixing the casing holder 13D to the side plate 60 in either the first orientation or the second orientation.

When the partitioning member 15 is completely rolled up, there is a margin of error in the stopping position at which the rotation of the claw 34 of the lock arm 33 due to factors such as the speed at which the partition member 15D is rolled up. The cut-out 62 is formed to face the claw 34 when it is within a rotation stopping range D that takes the margin of error into account (e.g., D=45 degrees). This prevents the claw 34 of the lock arm 33 from engaging with the inner teeth 31D of the casing holder 13 when the partitioning member 15D is completely rolled up.

Referring to Fig. 12, if the casing holder 13D is in the first orientation and the rotation stopping region D is within the prescribed angle E1, the claw 34 will be positioned reliably facing the cut- out section 62 when the partitioning member 15D is completely rolled up. Thus, the claw 34 will not engage with the inner teeth 31 D. Referring to Fig. 13, if the rotation stopping region D is not positioned within the prescribed angle E1 due to margins of error in production, assembly, or the like, the attachment mechanism 61 can be used to switch the casing holder 13D to the second orientation. Referring to Fig. 14, this allows the rotation stopping region D to be positioned in the prescribed angle E1 and the claw 34 can be positioned facing the cut-out 62 when the partitioning member 15D is completely rolled up.

Whether the rotation stopping region D is positioned within the prescribed angle E1 or not can be determined by using the roll-up device 10D to rapidly roll up the partitioning member 15D completely and then forcibly activating the lock mechanism 30D. Then, the claw 34 can be checked to see if it engages with the cut-out 62.

As described above, the cut-out 62 is formed at one portion along the perimeter of the inner teeth 31D so that the claw 34 is facing this cut-out 62 when the partitioning member 15D is completely rolled up. Thus, if the partitioning member 15D is rapidly rolled up completely and the roll-up shaft 14 is then stopped, the lock arm 34 rotates in opposition to the spring 35 due to inertia force. This prevents the lock mechanism 30D from locking the partitioning member 15D and preventing the partitioning member 15D from being pulled out. Furthermore, since the casing holder 13D can be attached to the main unit member 60 in either the first orientation or the second orientation, the claw 34 can be reliably positioned facing the cut-out section 62 when the partitioning member 15D is completely rolled up even if there is a margin of error due to the production process or the like.

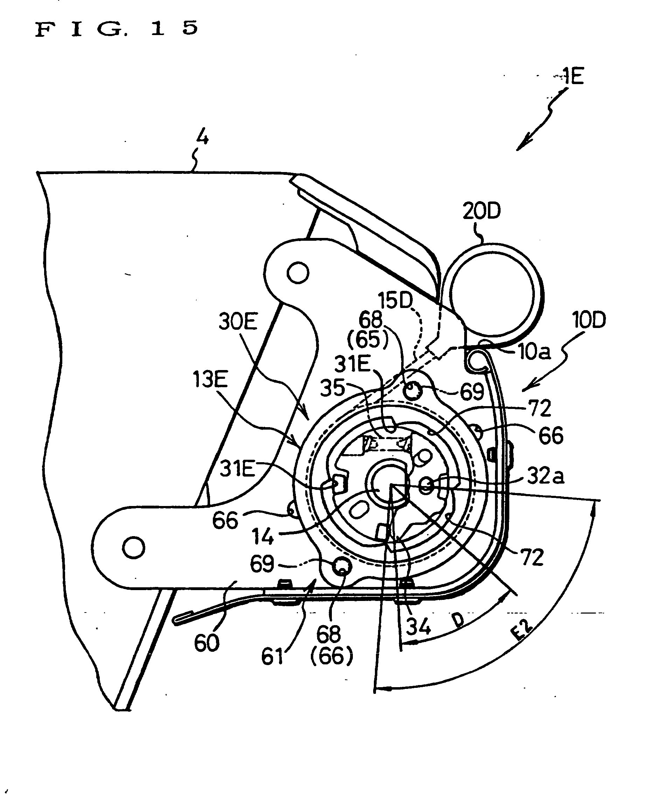

### 5) Alternative embodiment (see Fig. 15 through Fig. 17)

A partitioning system 1E according to this alternative embodiment uses a lock mechanism 30E that is a modified version of the lock mechanism 30D of the partitioning system 1D from the embodiment. In this lock mechanism 30E, four inner teeth 31E are formed on a casing holder 13E at 90-degree intervals. Four cut-outs 72 are formed along the perimeter of the inner teeth 31E of the casing holder 13E. The cut-outs 72 each have prescribed angles E2 (e.g., E2 = approximately 90 degrees) and are positioned so that they are facing the claws 34 when the partitioning member 15D is completely rolled up. This prevents the claw 34 of the lock arm 33 from engaging with the inner teeth 31E when the partitioning member 15D is completely rolled up.

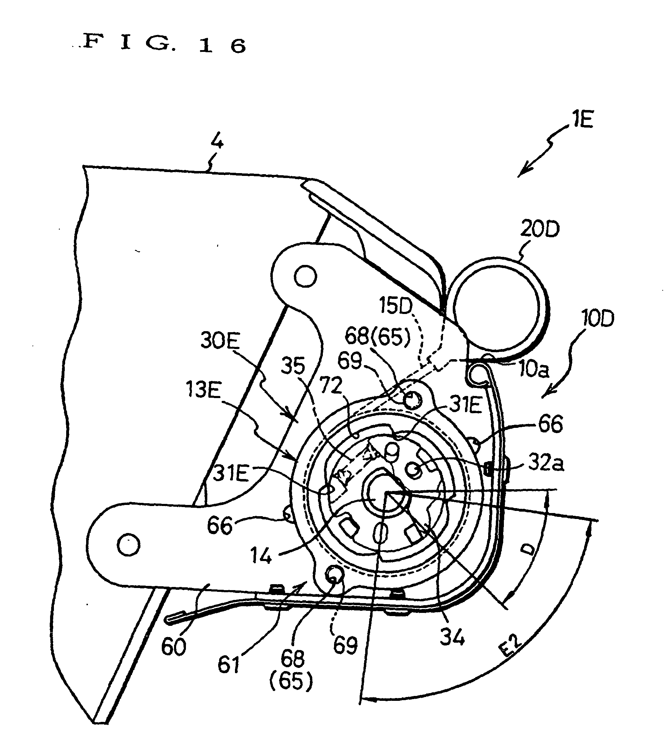

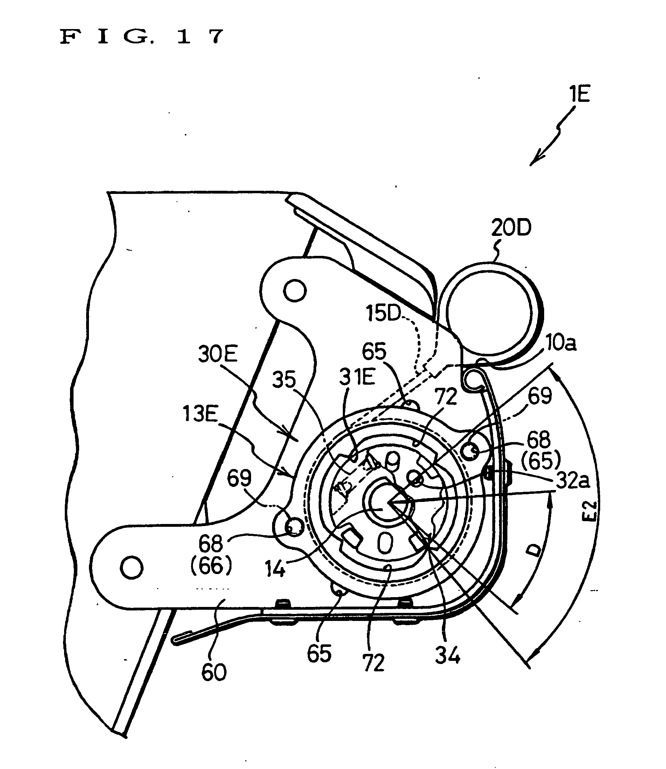

Referring to Fig. 15, when the casing holder 13E is in the first orientation and the rotation stopping region D is positioned within the prescribed angle E2, the claws 34 are reliably positioned facing the cut-outs 72 if the partitioning member 15D is completely rolled up. Referring to Fig. 16, margins of error due to production, assembly or the like may result in the rotation stopping region D not lying in the prescribed angle E2. In such cases, the attachment mechanism 61 can be used to switch the casing holder 13E to the second orientation. Referring to Fig. 17, this allows the rotation stopping region D to lie in the prescribed angle E2 and the claws 34 can be positioned facing the cut-outs 72 when the partitioning member 15D is completely rolled up.

Since four cut-outs 72 are formed in the gear 31E, if the partitioning member 15D is completely rolled up suddenly and then the roll-up shaft 14 is stopped, then the lock arm 34 will rotate in opposition to the spring 35 due to inertia force. This prevents the lock mechanism 30D from locking the partitioning member 15D so that the partitioning member 15D cannot be drawn out.

The partitioning system 1, 1A - 1E according to the embodiment and the alternative embodiment described above can be implemented in automobiles other than those having a pair of seat backs divided at 6:4 ratios. The partitioning systems can be implemented in automobiles having a pair of seat backs divided at different ratios by changing the lengths of the pair of roll-up devices, the pair of partitioning members, the pair of attachment sections, and the like. Also, with the partitioning systems 1, 1A - 1E, if necessary the partitioning member can be drawn out rearward and the stay can be engaged to the side walls toward the rear of the vehicle, the rear door, or the like, thus allowing the partitioning member to cover the baggage in the baggage area 7.

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. An automotive roll-up partitioning system (1) comprising:
a roll-up device having a rotatable roll-up shaft(14) biased to rotate in a direction of retraction;
a casing holder (13) rotatably supporting said roll-up shaft;
a partitioning member (15), having a base end fixed to said roll-up shaft, being rolled up thereon and extended therefrom;
a lock mechanism (30) for stopping rotation of said roll-up shaft;
wherein said lock mechanism is adapted to detect a rapid pulling out of said partitioning member and then to stop rotation of said roll-up shaft, thereby stopping rapid pulling out of said partitioning member,
and further comprising:
inner teeth (31) integrally formed with said casing holder;
a lock arm base (32) attached to a first end of said roll-up shaft;
a lock arm (33) pivotably supported on said lock arm base at a position eccentric from an axis of said roll-up shaft;
a claw (34) formed by a portion of said lock arm engagable with said inner teeth;
a sensor spring (35) biasing said lock arm in a direction such that said claw is disengaged from said inner teeth;
an inertia mass applying an inertia force to said lock arm in a direction of engagement between said claw (34) and said inner teeth (31) when said partitioning member (15) is rapidly pulled out from said roll-up device;
a cut-out (62, 72) having a prescribed length, in at least one portion along a perimeter of said inner teeth of said casing holder; and
said cut-out (62, 72) being positioned facing said claw (34) when said partitioning member is completely rolled up, thereby preventing said claw (34) of said lock arm from engaging with said inner teeth (31) when said partitioning member is completely rolled up in said roll-up device.

2. An automotive roll-up partitioning system according to claim 1, further comprising:
an attachment mechanism (61) for rotatably fixing said casing holder relative to an axis of said roll-up shaft;
said attachment mechanism having at least first and second attachment sections (65, 66) for attaching said casing holder in at least a first and a second prescribed orientation;
said second prescribed orientation being offset from said first prescribed orientation by a prescribed angle around said axis of said roll-up shaft, any one of said first prescribed orientation and said second prescribed orientation selectively allowing said cut-out to be positioned facing said claw when said partitioning member is completely rolled up, thereby preventing said claw of said lock arm from engaging with said inner teeth when said partitioning member is completely rolled up in said roll-up device.

3. An automotive roll-up partitioning system according to claim 1 further comprising:
a stay (20) extending through at least a portion of a leading end of said partitioning member, whereby said leading end is prevented from being retracted completely into said roll-up device; and
attachment means (21) located at opposite ends of said stay for attaching said leading end to a prescribed position, thereby holding said partitioning member in a retracted position.

4. An automotive roll-up partitioning system according to claim 1, further comprising:
a longitudinal slit (48) in a midpoint position of said partitioning member; and
said longitudinal slit extending from a leading end of said partitioning member to an end of said partitioning member attached to said roll-up shaft.

5. An automotive roll-up partitioning system comprising:
first and second automotive roll-up partitioning systems (10) according to any one of the preceding claims;
said first automotive roll-up partitioning system being attached to a first seat back (4);
said second automotive roll-up partitioning system being attached to a second adjacent seat back (4);
said first and second seat backs being divided along a lateral direction of a vehicle.

6. An automotive roll-up partitioning system according to claim 5, further comprising:
first and second attachment sections (40, 41) attached to said leading ends of first and second partitioning members (15) of said first and second automotive roll-up partitioning system (10) respectively;
said first and second attachment sections being rotatably connected to each other; and
said first and second partitioning members overlapping when said stay is engaged with said engagement section on said vehicle.

## Patentansprüche

1. Fahrzeugaufrollunterteilungssystem (1) mit:
einer Aufrollvorrichtung mit einer drehbaren Aufrollwelle (14), die zum Drehen in einer Richtung des Zurückziehens vorgespannt ist;
einem Gehäusehalter (13), der drehbar die Aufrollwelle trägt;
einem Unterteilungsteil (15) mit einem Basisende, das an der Aufrollwelle befestigt ist, das darauf aufgerollt ist und sich davon erstreckt;
einem Verriegelungsmechanismus (30) zum Stoppen der Drehung der Aufrollwelle;
worin der Verriegelungsmechanismus ausgelegt ist zum Erfassen eines schnellen Herausziehens des Unterteilungsteiles und dann Stoppen der Drehung der Aufrollwelle, wodurch das schnelle Herausziehen des Unterteilungsteiles gestoppt wird; und weiter mit:
inneren Zähnen (31), die einstückig mit dem Gehäusehalter gebildet sind;
einer Verriegelungsarmbasis (32), die an einem ersten Ende der Aufrollwelle angebracht ist;
einem Verriegelungsarm (33), der schwenkbar auf der Verriegelungsarmbasis an einer Position exzentrisch zu einer Achse der Aufrollwelle gelagert ist;
einer Klaue (34), die durch einen Abschnitt des Verriegelungsarmes gebildet ist, der in Eingriff mit den inneren Zähnen bringbar ist;
einer Sensorfeder (35), die den Verriegelungsarm in einer Richtung derart vorspannt, dass die Klaue von den inneren Zähnen gelöst wird;
einer Trägheitsmasse, die eine Trägheitskraft auf den Verriegelungsarm in einer Richtung des Eingriffes zwischen der Klaue (34) und den inneren Zähnen (31) anlegt, wenn das Unterteilungsteil (15) schnell aus der Aufrollvorrichtung gezogen wird;
einem Ausschnitt (62, 72) mit einer vorgeschriebenen Länge in mindestens einem Abschnitt entlang eines Umfanges der inneren Zähne des Gehäusehalters; und
wobei der Ausschnitt (62, 72) der Klaue (34) zugewandt positioniert ist, wenn das Unterteilungsteil vollständig aufgerollt ist, wodurch die Klaue (34) des Verriegelungsarmes daran gehindert ist, mit den inneren Zähnen (31) in Eingriff zu stehen, wenn das Unterteilungsteil vollständig in der Aufrollvorrichtung aufgerollt ist.

2. Fahrzeugaufrollunterteilungssystem nach Anspruch 1, weiter mit:
einem Anbringungsmechanismus (61) zum drehbaren Befestigen des Gehäusehalters relativ zu einer Achse der Aufrollwelle;
wobei der Anbringungsmechanismus mindestens einen ersten und einen zweiten Anbringungsabschnitt (65, 66) zum Anbringen des Gehäusehalters in mindestens einer ersten und einer zweiten vorgeschriebenen Orientierung aufweist;
wobei die zweite vorgeschriebene Orientierung von der ersten vorgeschriebenen Orientierung um einen vorgeschriebenen Winkel um die Achse der Aufrollwelle versetzt ist, irgendeine der ersten vorgeschriebenen Orientierung und der zweiten vorgeschriebenen Orientierung selektiv ermöglicht, dass der Ausschnitt der Klaue zugewandt positioniert ist, wenn das Unterteilungsteil vollständig aufgerollt ist, wodurch verhindert wird, dass, die Klaue des Verriegelungsarmes in Eingriff mit den inneren Zähnen steht, wenn das Unterteilungsteil vollständig in der Aufrollvorrichtung aufgerollt ist.

3. Fahrzeugaufrollunterteilungssystem nach Anspruch 1, weiter mit:
eine Stütze (20), die sich durch mindestens einen Abschnitt eines führenden Endes des Unterteilungsteiles erstreckt, wodurch das führende Ende daran gehindert ist, vollständig in die Aufrollvorrichtung zurückgezogen zu werden; und
einem Anbringungsmittel (21), das an entgegengesetzten Enden der Stütze angeordnet ist, zum Anbringen des führenden Endes an einer vorgeschriebenen Position, wodurch das Unterteilungsteil in einer zurückgezogenen Position gehalten ist.

4. Fahrzeugaufrollunterteilungssystem nach Anspruch 1, weiter mit:
einem Längsschlitz (48) an einer Mittelposition des Unterteilungsteiles; und
wobei sich der Längsschlitz von einem führenden Ende des Unterteilungsteiles zu einem Ende des Unterteilungsteiles erstreckt, das an der Aufrollwelle angebracht ist.

5. Fahrzeugaufrollunterteilungssystem mit:
einem ersten und einem zweiten Fahrzeugaufrollunterteilungssytem (10) nach einem der vorhergehenden Ansprüche;
wobei das erste Fahrzeugaufrollunterteilungssytem an einer ersten Sitzrückenlehne (4) angebracht ist;
das zweite Fahrzeugaufrollunterteilungssytem an einer zweiten benachbarten Sitzrückenlehne (4) angebracht ist;
die erste und die zweite Sitzrückenlehne entlang einer seitlichen Richtung eines Fahrzeuges unterteilt sind.

6. Fahrzeugaufrollunterteilungssystem nach Anspruch 5, weiter mit:
einem ersten und einem zweiten Anbringungsabschnitt (40, 41), die an den führenden Enden des ersten und des zweiten Unterteilungsteiles (15) des ersten bzw. zweiten Fahrzeugaufrollunterteilungssystems (10 angebracht sind;
wobei der erste und der zweite Anbringungsabschnitt drehbar jeweils miteinander verbunden sind; und
das erste uhd das zweite Unterteilungsteil überlappen, wenn die Stütze in Eingriff mit dem Eingriffsabschnitt auf dem Fahrzeug in Eingriff steht.

## Revendications

1. Système de cloisonnement (1) enroulable de véhicule automobile comprenant :
un dispositif d'enroulement ayant un arbre d'enroulement (14) rotatif contraint pour tourner dans une direction de rétractation ;
un support formant boîtier (13) supportant avec possibilité de rotation ledit arbre d'enroulement ;
un élément de cloisonnement (15), ayant une extrémité de base fixée audit arbre d'enroulement, enroulé sur celle-ci et s'étendant à partir de celle-ci ;
un mécanisme de verrouillage (30) pour arrêter la rotation dudit arbre d'enroulement ;
ledit mécanisme de verrouillage étant adapté pour détecter une traction rapide dudit élément de cloisonnement et pour arrêter ensuite la rotation dudit arbre d'enroulement, arrêtant ainsi le déroulement rapide dudit élément de cloisonnement,
et comprenant en outre:
des dents intérieures (31) formées d'un seul tenant avec ledit support formant boîtier ;
une base de bras de verrouillage (32) fixée à une première extrémité dudit arbre d'enroulement ;
un bras de verrouillage (33) supporté de façon pivotante sur ladite base de bras de verrouillage dans une position excentrée par rapport à un axe dudit arbre d'enroulement ;
une griffe (34) formée par une partie dudit bras de verrouillage pouvant venir en prise avec lesdites dents intérieures ;
un ressort de détection (35) contraignant ledit bras de verrouillage dans une direction telle que ladite griffe est mise hors de prise desdites dents intérieures ;
une masse d'Inertie appliquant une force d'inertie sur ledit bras de verrouillage dans une direction de mise en prise entre ladite griffe (34) et lesdites dents intérieures (31) lorsque ledit élément de cloisonnement (15) est rapidement sorti dudit dispositif d'enroulement ;
une découpe (62, 72) ayant une longueur prescrite, dans au moins une partie le long d'un périmètre desdites dents intérieures dudit support formant boîtier ; et
ladite découpe (62, 72) étant positionnée en face de ladite griffe (34) lorsque ledit élément de cloisonnement est complètement enroulé, empêchant ainsi ladite griffe (34) dudit bras de verrouillage de venir en prise avec lesdites dents intérieures (31) lorsque ledit élément de cloisonnement est complètement enroulé dans ledit dispositif d'enroulement.

2. Système de cloisonnement enroulable de véhicule automobile selon la revendication 1, comprenant en outre:
un mécanisme de fixation (61) pour fixer de façon tournante ledit support formant boîtier par rapport à un axe dudit arbre d'enroulement ;
ledit mécanisme de fixation ayant au moins des première et seconde sections de fixation (65, 66) pour fixer ledit support formant boîtier dans au moins une première et une seconde orientation prescrite ;
ladite seconde orientation prescrite étant décalée par rapport à ladite première orientation prescrite d'un angle prescrit autour dudit axe dudit arbre d'enroulement, n'importe laquelle des orientations entre la première orientation prescrite et ladite seconde orientation prescrite permettant de positionner de façon sélective ladite découpe en face de ladite griffe lorsque ledit élément de cloisonnement est complètement enroulé, empêchant ainsi ladite griffe dudit bras de verrouillage de venir en prise avec lesdites dents intérieures lorsque ledit élément de cloisonnement est complètement enroulé dans ledit dispositif d'enroulement.

3. Système de cloisonnement enroulable de véhicule automobile selon la revendication 1, comprenant en outre:
une traverse (20) s'étendant à travers au moins une partie d'une extrémité avant dudit élément de cloisonnement, empêchant ladite extrémité d'être complètement rétractée dans ledit dispositif d'enroulement ; et
des moyens de fixation (21) situés aux extrémités opposées de ladite traverse pour fixer ladite extrémité avant dans une position prescrite, maintenant ainsi ledit élément de cloisonnement dans une position rétractée.

4. Système de cloisonnement enroulable de véhicule automobile selon la revendication 1, comprenant en outre:
une fente longitudinale (48) dans une position médiane dudit élément de cloisonnement ; et
ladite fente longitudinale s'étendant de l'extrémité avant dudit élément de cloisonnement à une extrémité dudit élément de cloisonnement fixée audit arbre d'enroulement.

5. Système de cloisonnement enroulable de véhicule automobile comprenant:
des premier et second systèmes de cloisonnement enroulables de véhicule automobile (10) selon l'une quelconque des revendications précédentes ;
ledit premier système de cloisonnement enroulable de véhicule automobile étant fixé à un premier dossier de siège (4);
ledit second système de cloisonnement enroulable de véhicule automobile étant fixé à un second dossier de siège (4) adjacent ;
lesdits premier et second dossiers de siège étant séparés le long d'une direction latérale d'un véhicule.

6. Système de cloisonnement enroulable de véhicule automobile selon la revendication 5, comprenant en outre:
des première et seconde sections de fixation (40, 41) fixées auxdites extrémités avant des premier et second éléments de cloisonnement (15) desdits premier et second systèmes de cloisonnement enroulable de véhicule automobile (10) respectivement ;
lesdites première et seconde sections de fixation étant reliées de façon tournante entre elles ; et
lesdits premier et second éléments de cloisonnement se chevauchant lorsque ladite traverse est en prise avec ladite section de prise sur ledit véhicule.
